# EUROPÄISCHE PATENTSCHRIFT

(11) **EP 0 345 796 B1**
(45) Veröffentlichungstag und Bekanntmachung des Hinweises auf die Patenterteilung: **26.01.1994**
(21) Anmeldenummer: 89110423.4
(22) Anmeldetag: 09.06.1989
(51) Int. Cl.: H02K 7/14, F04D 25/06, H02K 7/08, H02K 29/08

(54) **Durch einen Elektromotor angetriebener Lüfter**
Ventilator driven by an electric motor
Ventilateur entraîné par un moteur électrique

(30) Priorität: 21.06.1988 DE 3820857; 04.06.1988 DE 3819110
(43) Veröffentlichungstag der Anmeldung: 13.12.1989
(73) Patentinhaber: TEMIC Automotive Electric Motors GmbH, 26133 Oldenburg (DE)
(72) Erfinder: Altmann, Manfred, Dipl.-Ing., D-2900 Oldenburg (DE); Zelle, Edgar, D-2902 Rastede (DE); Oltmanns, Karl-Heinz, Dipl.-Ing. (FH), D-2900 Oldenburg (DE)
(74) Vertreter: Maute, Hans-Jürgen, Dipl.-Ing.

(56) Entgegenhaltungen:
- CH-A- 363 119
- DE-A- 3 326 543
- DE-A- 3 340 292
- FR-A- 1 258 056
- GB-A- 858 640
- US-A- 3 175 755
- US-A- 4 128 364
- US-A- 4 488 070
- PATENT ABSTRACTS OF JAPAN vol, no. 284 (E-357)(2007) 12. November 1985 & JP-A-60 125 154 ( HITACHI ) 4. Juli 1985
- PATENT ABSTRACTS OF JAPAN vol. 11, no. 271 (E-536)(2718) 3. September 1987 & JP-A-62 071 449 ( MATSUSHITA ) 2. April 1987
- PATENT ABSTRACTS OF JAPAN vol. 11, no. 312 (E-548)(2759) 12. Oktober 1987 & JP-A-62 104 451 ( DAIKIN IND. ) 14. Mai 1987

## Beschreibung

Die Erfindung bezieht sich auf eine Anordnung entsprechend dem Oberbegriff des Anspruchs 1.

Lüfteranordnungen dieser prinzipiellen Bauart sind an sich in einer Vielzahl von Ausführungsformen bekannt. Bei Ausbildung des Lüfterrades besteht jedoch das Problem, daß bei Anordnung des Elektromotors im Innenraum des Lüfterrades eine Abhängigkeit zwischen dem Durchmesser des Außenläufers und dem Durchmesser des Lüfterrades vorhanden ist. So kann bei einem Radiallüfterrad mit vorgegebenen Lüfterraddurchmesser und einem ebenfalls vorgegebenen Luftdurchsatz ein Elektromotor der erforderlichen Leistung aufgrund seiner Baugröße oftmals nicht mehr im Lüfterradinnenraum angeordnet werden, weil dann der für die Luftführung notwendige Raum zumindest teilweise vom Motor eingenommen wird. Die bisher übliche Bauweise, Motor und Lüfterrad axial hintereinander anzuordnen, erfordert einen beträchtlich langen Einbauraum, der in vielen Geräten nicht zur Verfügung steht.

Der vorliegenden Erfindung liegt somit die Aufgabe zugrunde, eine Lüfteranordnung zu schaffen, deren Durchmesser im Verhältnis zur Förderleistung möglichst gering ist. Darüber hinaus soll die Drehzahl des Lüfters regelbar sein, ohne daß die Baugröße des Motors davon beeinflußt wird.

Durch die DE 33 26 543 A1 ist ein Elektromotor mit Außenläufer und einem mit diesen verbundenen Lüfterrad bekannt, dessen Lüfterflügel den Außenläufer zumindest auf einen Teil seiner axialen Länge übergreifen. Dieser Elektromotor ist so gestaltet, daß das Ständerpaket des Elektromotors direkt auf einer einseitig gehalterten zentralen Achse befestigt ist. Auch ist außerhalb des Ständerpaketes und des Wickelkopfes eine Lageranordnung vorgesehen, mittels der eine Nabe drehbar gelagert ist, an welcher der Außenläufer und das Lüfterrad befestigt sind.

Auch ist durch die US-PS 3,175,755 ein Elektromotor bekannt, bei dem der Innenring der Lüfterblende mittels Schrauben an einem Vorsprung befestigt ist.

Weiterhin offenbart die DE 33 40 292 A1 einen Gleichstromkleinstventilator, bei dem der Elektromotor als Gleichstrommotor mit elektronischer Kommutierung ausgebildet ist.

Die FR 1,258,056 zeigt einen Elektromotor, wobei das Radiallüfterrad eine Luftblende aufweist, zu deren beiden Seiten Lüfterflügel angeordnet sind.

Schließlich ist durch die CH 363 119 ein Radialgebläse bekannt, bei dem sein Schaufelrad als Außenläuferrotor eines elektrischen Motors ausgebildet ist.

Diese Aufgabe wird gemäß der Erfindung im wesentlichen durch die in Kennzeichen des Hauptanspruchs aufgeführten Maßnahmen gelöst, während in den Unteransprüchen besonders vorteilhafte Weiterbildungen der Erfindung gekennzeichnet sind.

Die Erfindung bringt den Vorteil mit sich, daß der Antriebsmotor des Lüfters aufgrund der außerhalb des Ständers angeordneten Lagerung für seinen Außenläufer einen kleineren Gesamtdurchmesser als Außenläufermotoren üblicher Bauart erhält. Der Durchmesser wird zusätzlich noch dadurch verkleinert, daß die den Motor tragende Achse dem Ständer als magnetisch wirksames Bauteil zugeordnet ist und somit das Ständerpaket im Durchmesser verringert werden kann. Die Ausbildung als Außenläufermotor bringt den weiteren Vorteil mit sich, daß infolge des Schwungsmomentes des Außenläufers die durch die elektronische Kommutierung entstehenden Drehmomentschwankungen kompensiert werden und der Motor ein besseres Laufverhalten zeigt. Darüber hinaus ist der Aufbau des Außenläufers äußerst unkompliziert und automatengerecht, da er weder ein Blechpaket noch Wicklungen benötigt. Auch die Montage des Lüfters am Motor ist aufgrund der fertigungsgerechten Gestaltung der einzelnen Bauteile mittels Automaten durchführbar. Die Permanentmagnete des Läufers sind in vorteilhafter Weise zumindest B-seitig an ihren Stirnseiten nicht abgedeckt und somit geeignet, elektronischen Bauelementen, die durch Magnetfelder beeinflußbar sind, als Impulsgeber zu dienen, so daß z. B. Drehzahl, Drehrichtung und Stellung des Läufers ohne Einsatz aufwendiger zusätzlicher Bauteile wie z. B. eines Tachogenerators detektiert werden können. Die Befestigung des Motors lediglich an seiner das Ständerpaket tragenden zentralen Achse läßt es zu, daß B-seitig ein Lüftführungsraum für die Kühlluft des Motors vorgesehen werden kann, in dem auch Leiterplatten zur Aufnahme elektronischer Bauteile oder dgl. angeordnet werden können, deren gute Kühlung somit ebenfalls gewährleistet ist. Darüber hinaus ist durch diese Art der Motorbefestigung eine beiseitig freie Lufteinströmung in das Lüfterrad möglich. Die Motorkühlung, insbesondere die der Wickelköpfe wird noch dadurch verbessert, daß die Speichen sowohl der Läufernabe als auch des Lüfterrades als Lüfterflügel ausgebildet sind. Die Enden der Ständerwicklung können direkt über Steckverbindungen mit der Leiterplatte für die Elektronik-Bauteile verbunden werden. Die Anordnung einer relativ langen Nabe mit zwei oder mehreren Kugellagern bzw. Lagerflächen sichert eine kippfreie Befestigung des Außenläufers und läßt einen relativ geringen Luftspalt zu, wodurch der Wirkungsgrad und damit die Baugröße des Motors positiv beeinflußt werden. Läufernabe und Lüfterrad eignen sich auch bevorzugt zur Aufnahme von Gewichten zum Auswuchten der drehbaren Bauteile der Anordnung. Die Baulänge der Lüfteranordnung insgesamt ragt trotz der relativ langen Nabe nicht oder nur unwesentlich über die Breite des Radiallüfterrades und des den Motor haltenden Bauteiles hinaus.

Ein Ausführungsbeispiel der Erfindung ist in der Zeichnung dargestellt und wird im Folgenden näher beschrieben. Es zeigen:
- Fig. 1: eine Übersichtszeichnung der teilweise im Schnitt dargestellten gesamten Lüfteranordnung,
- Fig. 2 - 4: Teilausschnitte der Anordnung, in welcher die Verbindung zwischen dem Außenläufer, dem Lüfterrad und der Nabe dargestellt ist,
- Fig. 5: die Draufsicht auf das Lüftergehäuse und
- Fig. 6 + 7: abgewandelte Ausführungsformen sowohl des Lüfterrades als auch des Lüftergehäuses.

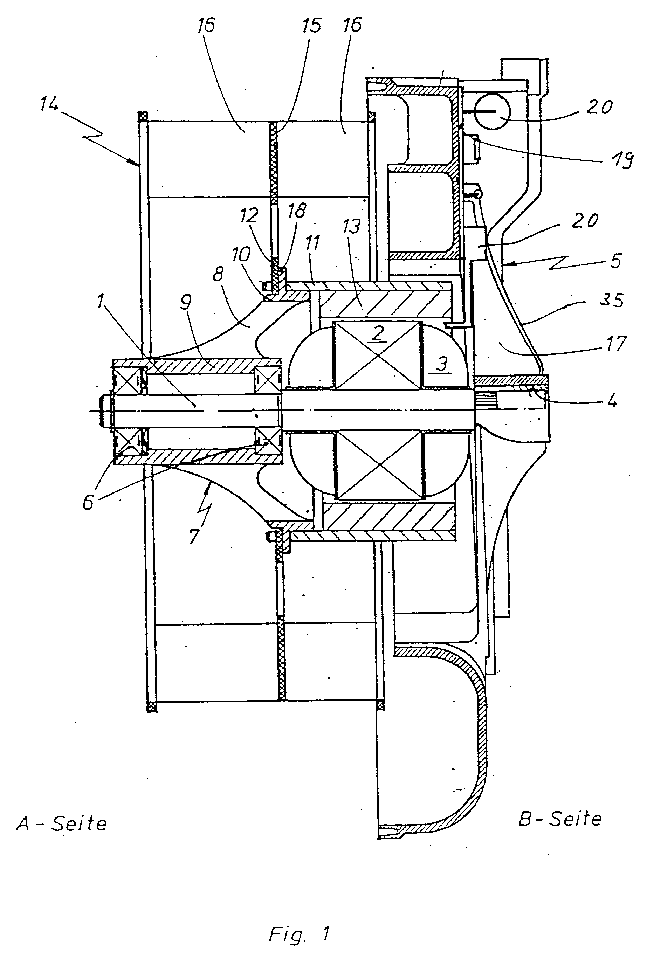

Wie aus Fig. 1 ersichtlich, besitzt die Lüfteranordnung eine zentrale Achse 1, welche sowohl den antreibenden Elektromotor als auch - über die gemeinsame Nabe (7) - den Lüfter trägt. Auf der Achse 1 ist das Ständerpaket 2 mit den Wicklungen 3 unverdrehbar befestigt. Die Halterung der Achse 1 erfolgt auf der B-Seite des Elektromotors beispielsweise in einer Aufnahme 4 des Lüftergehäuses 5 oder in einem anderen geeigneten, feststehenden Bauteil. A-seitig trägt die Achse 1 eine Lageranordnung, die im beschriebenen Ausführungsbeispiel als Doppel-Kugellager 6 ausgebildet ist, wobei der Abstand beider Kugellager voneinander größer als die Länge des Ständerblechpaketes ist. Es sind im Rahmen der Erfindung auch andere Lagermittel denkbar, durch die das Kippmoment der von der Lageranordnung getragenen Bauteile gegenüber der Achse 1 auf den geringstmöglichen Wert begrenzt wird.

Mittels der Lageranordnung ist die Nabe 7 drehbar auf der Achse 1 gelagert. Über mehrere Speichen 8 ist der Innenring 9 der Nabe 7 mit deren Außenring 10 verbunden, an welchem sowohl der Rückschlußring 11 des Außenläufers als auch der Innenring 12 des Lüfterrades 14 befestigt sind. Die Speichen 8 können als Lüfterflügel ausgebildet sein.

Der Außenläufer des Elektromotors besteht aus dem Rückschlußring 11, der beispielsweise als Rohrabschnitt aus einem ferromagnetischen Werkstoff ausgebildet sein kann und eine Mehrzahl unterschiedlich gepolter Permanentmagnete 13 an seiner Innenwandung trägt. Die Permanentmagnete 13 stehen mit dem Ständerpaket in magnetischer Wirkverbindung.

Das Lüfterrad ist im bevorzugten Ausführungsbeispiel als geteiltes Radiallüfterrad ausgebildet, an dessen ringförmiger Luftleitblende 15 beiseitig axial mehrere Lüfterflügel 16 angeordnet sind. In vorteilhafter Weise ist das Lüfterrad 14 beidseitig ansaugend ausgebildet, so daß die B-seitig angesaugte Luft zusätzlich auch zur Kühlung des Motors und der Elektronikbauteile dienen kann. Die Luftleitblende 15 ist mittels mehrerer ggf. federnder Speichen mit ihrem Innenring 12 verbunden. Das Lüfterrad 14 ist vorzugsweise als einstückiges Kunststoff-Spritzgußteil ausgebildet.

Die Luftführung innerhalb der Anordnung erfolgt derart, daß A-seitig ein Teil des von den Lüfterflügeln 16 angesaugten Luftstromes durch die Saugwirkung der Speichen 8 über den A-seitigen Wickelkopf geführt wird. B-seitig wird aufgrund der Saugwirkung des sich drehenden Außenläufers ein Teilluftstrom über die Leiterplatte 19 in den Wickelkopfraum geführt. Dadurch ist beidseitig eine gute Kühlung der Wickelköpfe gewährleistet.

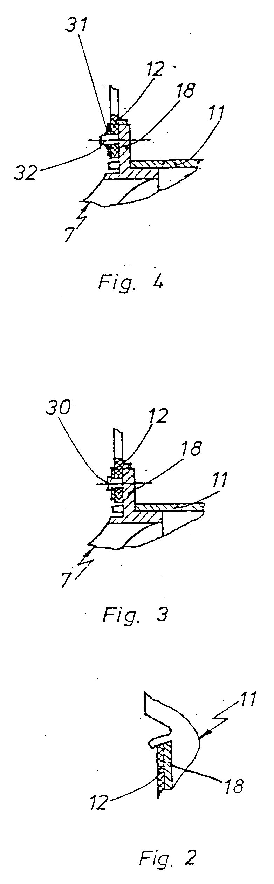

In den Figuren 2 bis 4 sind vorteilhafte Ausführungsformen für die Verbindung sowohl des Lüfterrades 14 als auch des Außenläufers mit dem Außenring 10 der Nabe 7 dargestellt. Die beispielsweise als Druckgußteil hergestellte Nabe 7 besitzt auf ihrem Außenring 10 einem ringförmigen Vorsprung 18, an welchem motorseitig der Rückschlußring 11 des Außenläufers und motorabseitig der Innenring 12 der Luftleitblende 15 anliegen.
Gemäß der Fig. 2 ist der Rückschlußring 11 nabenseitig mit mehreren axialen Ausnehmungen versehen, in welche formschlüssig radial vorspringende Absätze sowohl des ringförmigen Vorsprunges 18 als auch des Innenringes 12 der Luftleitblende 15 eingreifen, so daß sich eine Verzahnung der Bauteile 12 und 18 mit dem Bauteil 11 ergibt. Die eindeutige und unverrückbare Festlegung dieser drei Bauteile aneinander erfolgt dadurch, daß beidseitig neben den axialen Ausnehmungen des Rückschlußringes 11 in dessen Achsrichtung mittels eines meißelähnlichen Werkzeuges eine Kerbe eingestemmt wird. Dadurch werden die in die Ausnehmungen ragenden Absätze festgeklemmt und sicher gehaltert.

Gemäß der Figur 3 ist ebenfalls der Vorsprung 18 mit der Stirnseite des Rückschlußringes 11 verzahnt und außerdem mit angespritzten oder eingesetzten Nieten 30 versehen, mittels denen der Innenring 12 der Luftleitblende 15 am Vorsprung 18 befestigt ist. Die Bauteile 11, 12 und 18 sind auch bei dieser Befestigungsart formschlüssig miteinander verbunden und unverrückbar festgelegt, wenn das Niet 30 ggf. unter Zwischenfügung einer Unterlegscheibe an seinem freien Ende durch Materialverformung zu einem Nietkopf ausgebildet wird. Die Befestigung ist gemäß Fig. 4 aber auch in der Weise durchführbar, daß anstelle des Nietkopfes eine sich selbsttätig festklemmende Sperrscheibe 31 auf einen nietähnlichen Zapfen 32 aufgeschoben wird. Selbstverständlich sind im Rahmen der Erfindung auch andersartige Befestigungen wie z. B. mittels Schrauben, durch Kleben, Schweißen,Löten oder dergl. möglich.

Die Drehzahl des Elektromotors wird vorzugsweise mittels einer elektronischen Schaltung gesteuert, deren Schaltungselemente auf einer Leiterplatte 19 zusammengefaßt sind. Die Leiterplatte 19 ist am Lüftergehäuse 5 vorzugsweise im Ansaugstrom angeordnet und/oder derart befestigt, daß ein Wärmeleitkontakt zum Lüftergehäuse besteht. Beim beschriebenen Ausführungsbeispiel ist beispielsweise das Lüftergehäuse 5 aus einer Metallegierung hergestellt und besitzt eine angeformte Ebene 34, die zur Aufnahme der Platine bzw. der Elektronikbauteile dient. Die Umrißform der Ebene 34 ist dabei zur Motorachse hin der Form des Außenläufers soweit angepaßt, das beispielsweise ein zur Drehzahlaufnahme dienender Sensor, z. B. ein Hallgenerator, in einer Weise angeordnet werden kann, die seine Beaufschlagung durch die Permanentmagnete des Außenläufers ermöglicht. Zu diesem Zweck ist der Hallgenerator in unmittelbarer Nähe der B-seitigen Stirnseiten der Permanentmagnete 13 angeordnet und/oder greift in den Raum zwischen der Wicklung 3 und den Permanentmagneten 13 ein. Zur Halterung des Drehzahlsensors kann ein Vorsprung am Gehäuse 5 oder an der Leiterplatte 19 dienen.

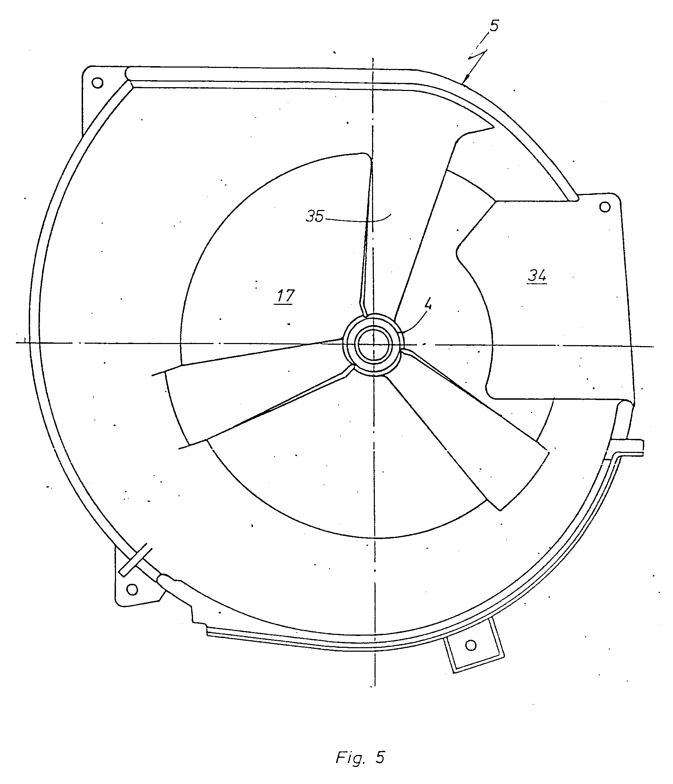

Das in Figur 5 dargestellte Lüftergehäuse 5 besitzt eine Ansaugöffnung 17, welche durch Speichen 35 übergriffen wird, die zur Halterung der Aufnahme 4 dienen. Die Speichen 35 sind vorzugsweise in sich verdrillt ausgebildet, um der ausgesaugten Luft einen möglichst geringen Widerstand entgegenzusetzen und um die Funktion einer Luftleitschaufel zum Zweck der Motorkühlung zu erfüllen. Die Anschlußleiter für die Wicklung 3 werden vorzugsweise entlang einer solchen Speiche 35 geführt. Am Lüftergehäuse 5 sind Mittel zur Befestigung des Lüfteraggregates am Gerät vorgesehen.

Die beschriebene Ausgestaltung der Lüfteranordnung läßt es in vorteilhafter Weise zu, daß Mittel zum Auswuchten der gesamten Einheit Nabe-Außenläufer-Lüfterrad an den Speichen der Nabe des Lüfterrades angebracht werden Können.

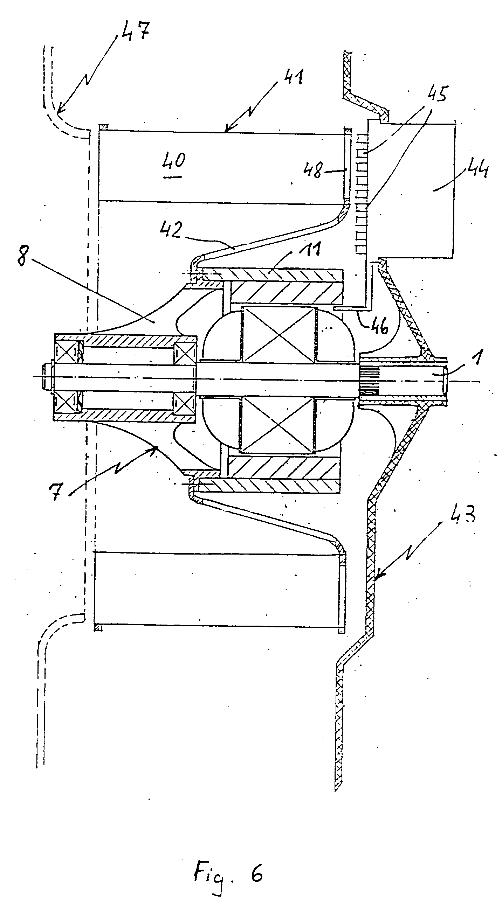

In der Fig. 6 ist eine weitere Ausführungsform der Lüfteranordnung dargestellt, bei welcher ein ungeteiltes, einseitig ansaugendes, sog. "einflutiges" Lüfterrrad Verwendung findet. Die Lüfterflügel 40 sind einteilig ausgebildet und einseitig (B-seitig) an der Nabe 42 befestigt, während ihre freien Enden durch einen Ring miteinander verbunden sind. Das Lüfterrad 41 besitzt zu seiner Befestigung eine in seinen Innenraum eingezogene, in den Tragring 48 übergehende und vorzugsweise kegelstumpfförmig ausgebildete Nabe 42, die auf eine der oben beschriebenen Befestigungsarten an der Nabe 7 zusammen mit dem Rückschlußring 11 befestigt sein kann. Die Nahe 42 besitzt mehrere gegebenenfalls federnde Speichen, die den Luftdurchtritt erlauben. Die Luftansaugung erfolgt durch den angedeuteten Ansaugtrichter 47. Der Elektromotor und der Lüfter sind auch hier B-seitig mittels der Achse 1 an den feststehenden Gehäuse 43 befestigt, welches jedoch als nach außen geschlossenes Gehäuse ausgebildet ist. Im Gehäuse 43 befindet sich eine gegebenenfalls verkapselte und mit den angedeuteten Kühlrippen 45 versehene Leiterplatte 44, welche die zum Betrieb des Elektromotors notwendigen elektronischen Bauteile trägt und an welcher auch der Sensor 46 befestigt ist. Ein Teilstrom der vom Lüfterrad 41 geförderten Luft erfaßt somit auch die Leiterplatte 44 und bewirkt deren ausreichende Kühlung. Die Leiterplatte 44 kann darüber hinaus so angeordnet sein, daß sie mit dem Lüftergehäuse in Wärmeleitkontakt steht.

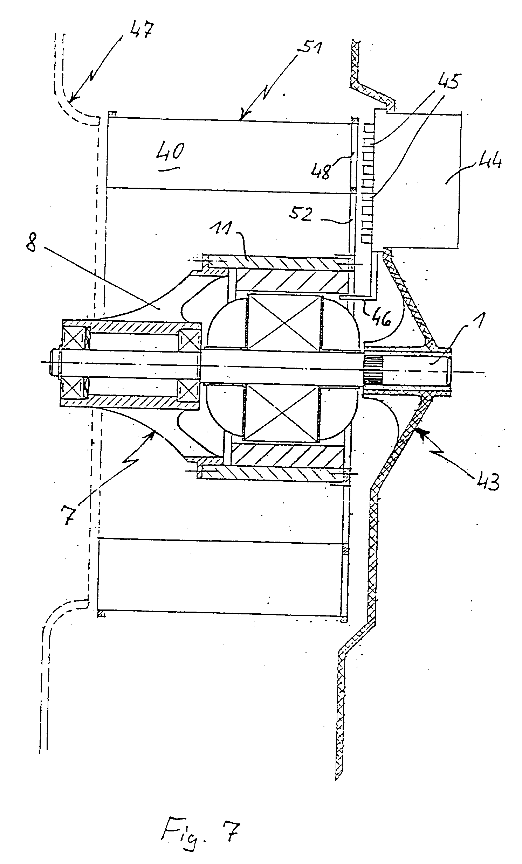

Eine weitere Ausbildung der Lüfteranordnung ist schließlich in der Fig. 7 dargestellt. Gemäß dieser Fig. ist das einflutige Lüfterrad 51 an der freien Seite (B-seitig) des Rückschlußringes 11 über einen kreisringförmigen, mit dem Tragring 48 verbundenen und mit Speichen versehenen Haltering 52 befestigt. Diese Ausgestaltung hat den Vorteil, daß die Ansaugseite des Lüfterrades 51 strömungsgünstig ausgebildet und frei von im Luftstrom angeordneten Tragelementen für das Lüfterrad ist. Das Lüftergehäuse 43 ist auch bei dieser Anordnung geschlossen ausgebildet und trägt die Leiterplatte 44, deren Külhlrippen 45 im Nebenluftstrom des Lüfterrades 51 liegen.

Die Verwendung eines gemäß der vorliegenden Beschreibung ausgebildeten Elektromotors ist nicht auf Lüfteranordnungen der beschriebenen Art beschränkt. Im Rahmen der Erfindung ist es auch denkbar, Axialgebläse geringen Durchmessers mit hoher Luftdurchsetzung mittels eines solchen Elektromotors anzutreiben. Die Ausbildung des Motors als elektronisch steuerbarer kollektorloser Gleichstrommotor ist besonders vorteilhaft für den Einsatz in Fahrzeugen, beispielsweise in Klimaamlagen für Kraftfahrzeuge, bei denen eine gute Regelbarkeit des Luftdurchsatzes erwünscht ist.

## Patentansprüche

1. Elektromotor mit einem Außenläufer und einem mit diesem verbundenen Lüfterrad, dessen Lüfterflügel den Außenläufer zumindest auf einen Teil seiner axialen Länge übergreifen,
- wobei das Ständerpaket (2) des Elektromotors direkt auf einer zentralen Achse (1) befestigt ist, welche B-seitig in einer Aufnahme (4) eines Lüftergehäuses (5) gehaltert ist und welche A-seitig außerhalb des Ständerpaketes (2) und des Wickelkopfes (3) ein Doppelkugellager (6) mit einem die Länge des Ständerblechpaketes übersteigenden Kugellagerabstand trägt, mittels der eine Nabe (7) drehbar gelagert ist, an welcher der Außenläufer und das Lüfterrad (14) befestigt sind,
- **dadurch gekennzeichnet**, daß der Außenläufer einen vorzugsweise hohlzylindrischen Rückschlußring (11) aufweist, an dessen Innenwandung Permanentmagnete (13) angeordnet sind, und
- daß das Lüfterrad (14) als geteiltes Radiallüfterrad beidseitig saugend ausgebildet ist, an dessen ringförmiger Luftleitblende (15) beidseitig axial mehrere Lüfterflügel (16) angeordnet sind.

2. Elektromotor nach Anspruch 1, **dadurch gekennzeichnet**, daß die Nabe (7) Speichen (8) besitzt, die mit der im Rückschlußring (11) halternden Aufnahme (Vorsprung 18) verbunden ist.

3. Elektromotor nach Anspruch 1 oder 2, **dadurch gekennzeichnet**, daß die Speichen (8) sowohl der Nabe (7) als auch des Lüfterrades (14) zur Erzielung eines Kühlluftstromes lüfterflügelartig ausgebildet sind.

4. Elektromotor nach einem der vorhergehenden Ansprüche, **dadurch gekennzeichnet**, daß der Elektromotor einschließlich dessen Steuerelemente innerhalb des Lüftergehäuses (5) angeordnet sind, an dessen Rückwand die zentrale Achse (1) befestigt ist.

5. Elektromotor nach Anspruch 4, **dadurch gekennzeichnet**, daß elektronische Bauteile (20) zur Drehzahl- und/oder Stellungserfassung des Läufers vorgesehen sind, die in Wirkverbindung mit den Stirnseiten der Permanentmagnete (13) stehen und durch die von diesen ausgehenden magnetischen Feldern beaufschlagt werden.

6. Elektromotor nach Anspruch 4, **dadurch gekennzeichnet**, daß elektronische Bauteile (20) zur Drehzahl- und/oder Stellungserfassung des Läufers vorgesehen sind, die in den Luftspalt zwischen den B-seitigen Ständerwickelkopf und des Permanentläufers (13) eingreifen.

7. Elektromotor nach den Ansprüchen 5 oder 6, **dadurch gekennzeichnet**, daß die elektronischen Bauteile (20) gegebenenfalls einschließlich weiterer Schaltungs- und Steuermittel auf einer oder mehreren Leiterplatten (19) angeordnet sind, die B-seitig zwischen einem feststehenden Bauteil und der Stirnseite des Außenläufers bzw. des Ständerwickelkopfes angeordnet sind.

8. Elektromotor nach Anspruch 7, **dadurch gekennzeichnet**, daß die Leiterplatten (19) zumindest von einem Teilluftstrom der vom Lüfterrad (14) erzeugten Luftströmung beaufschlagt werden.

9. Elektromotor nach Anspruch 1, **dadurch gekennzeichnet**, daß das Lüfterrad (41, 51) mit ungeteilten Lüfterflügeln (40) ausgebildet ist, die einseitig (B-seitig) an einem mit dem Außenläufer (11) verbundenen Tragring (48) befestigt sind und daß das die Motorachse (1) aufnehmende Lüftergehäuse (43) nach außen geschlossen ausgebildet ist.

10. Elektromotor nach Anspruch 9, **dadurch gekennzeichnet**, daß das Lüfterrad (41) eine in seinen Innenraum eingezogene, etwa kegelstumpfförmige Tragring (48) mit der Nabe (7) und dem Rückschlußring (11) auf der A-Seite des Elektromotors verbindet und dort befestigt ist.

11. Elektromotor nach Anspruch 9, **dadurch gekennzeichnet**, daß das Lüfterrad (51) einseitig (B-seitig) einen mit Speichen versehenen Haltering (52) besitzt, an welchem radial außen der Tragring (48) mit den Lüfterflügeln (40) angeordnet ist und welcher radial innen an der B-Seite des Rückschlußringes (11) angeordnet ist.

12. Elektromotor nach einem der vorhergehenden Ansprüche, **dadurch gekennzeichnet**, daß die elektronischen Bauteile der Motorsteuerung auf einer gekapselten Leiterplatte (44) angeordnet sind, die am Lüftergehäuse (43) befestigt ist und Kühlrippen (45) aufweist, welche von einem Nebenluftstrom des Lüfterrades (14, 44, 51) überstrichen werden.

13. Elektromotor nach einem der vorhergehenden Ansprüche, **dadurch gekennzeichnet**, daß die zentrale Achse (1) als magnetisch wirksames Bauelement mit dem Ständerpaket (2) zusammenwirkt.

## Claims

1. Electric motor with an external rotor and a fan wheel connected therewith, the fan blades of which engage over the external rotor over at least a part of its axial length,
- wherein the stator body (2) of the electric motor is fastened directly on a central axle (1), which at the B end is held in a receptacle (4) of a fan housing (5) and which at the A end carries, outside the stator body (2) and the winding end (3), a double ball bearing (6) which has a ballbearing spacing exceeding the length of the stator lamination body and by means of which a hub (7) is rotatably mounted, to which the external rotor and the fan wheel (14) are fastened,
- characterised thereby that the external rotor has a preferably hollow cylindrical short-circuit ring (11), at the inner wall of which permanent magnets (13) are arranged, and
- that the fan wheel (14) is constructed as a divided radial fan wheel inducting at both sides, at the annular air duct baffle (15) of which several air fan blades (16) are axially arranged at both sides.

2. Electric motor according to claim 1, characterised thereby that the hub (7) has spokes (8), which are connected with the receiver (projection 18) retained in the short-circuit ring (11).

3. Electric motor according to claim 1 or 2, characterised thereby that the spokes (8) not only of the hub (7) but also of the fan wheel (14) are constructed to be fan-blade-like for the achieving of a cooling air flow.

4. Electric motor according to one of the preceding claims, characterised thereby that the electric motor inclusive of the control elements thereof are arranged within the fan housing (5), to the back wall of which is fastened the central axle (1).

5. Electric motor according to claim 4, characterised thereby that electronic components (20) for rotational speed and/or setting detection of the rotor are provided, which are disposed in operative connection with the end faces of the permanent magnets (13) and are acted on by the magnetic fields going out from these.

6. Electric motor according to claim 4, characterised thereby that electronic components (20) for rotational speed and/or setting detection of the rotor are provided, which engage in the air gap between the stator winding end at the B end and the permanent rotor (13).

7. Electric motor according to claims 5 or 6, characterised thereby that the electronic components (20), in a given case inclusive of further switching and control means, are arranged on one or more circuitboards (19), which are arranged at the B end between a stationary component and the end face of the external rotor or of the stator winding end.

8. Electric motor according to claim 7, characterised thereby that the circuitboards (19) are acted on by at least one partial air flow of the air current generated by the fan wheel (14).

9. Electric motor according to claim 1, characterised thereby that the fan wheel (41, 51) is constructed with undivided fan blades (40), which are fastened at one end to a carrier ring (48) connected with the external rotor (11) and that the fan housing (43) receiving the motor axle (1) is constructed to be closed outwardly.

10. Electric motor according to claim 9, characterised thereby that the fan wheel (41) [has] an approximately frustoconical carrier ring (48), which is drawn into the interior of the fan wheel and is connected with the hub (7) and the short-circuit ring (11) at the A-side of the electric motor and fastened there.

11. Electric motor according to claim 9, characterised thereby that the fan wheel (51) has at one side (B side) a holding ring (52) which is provided with spokes and which is arranged radially inwardly at the B side of the short-circuit ring (11), radially outwardly of which holding ring is arranged at the carrier ring (48) with the fan blades (40).

12. Electric motor according to one of the preceding claims, characterised thereby that the electronic components of the motor control are arranged on an encased circuitboard (44), which is fastened to the fan housing (43) and has cooling ribs (45), which are swept over by a secondary air flow of the fan wheel (14, 44, 51).

13. Electric motor according to one of the preceding claims, characterised thereby that the central axle (1) co-operates as a magnetically active component, with the stator body (2).

## Revendications

1. Moteur électrique avec un rotor extérieur et une roue de ventilateur reliée à celui-ci, dont les ailettes de ventilateur passent sur le rotor extérieur, au moins sur une partie de sa longueur axiale,
- dans lequel le paquet du stator (2) du moteur électrique est directement fixé sur un axe (1) central, qui est maintenu côté B dans un logement (4) d'un boîtier de ventilateur (5) et qui côté A porte, à l'extérieur du paquet du stator (2) et de la tête de bobine (3), un double roulement à billes (6) avec une distance de roulement à billes dépassant la longueur du paquet de tôles du stator, au moyen duquel un moyeu (7) est monté tournant sur lequel sont fixés le rotor extérieur et la roue de ventilateur (14),
- caractérisé en ce que le rotor extérieur présente un anneau de retour (11) de préférence cylindrique creux sur la paroi intérieure duquel sont placés des aimants permanents (13) et
- en ce que la roue de ventilateur (14) est une roue radiale en deux parties aspirant sur les deux côtés, sur la tôle de guidage d'air (15) annulaire de laquelle sont fixées axialement, des deux côtés, plusieurs ailettes de ventilateur (16).

2. Moteur électrique selon la revendication 1, caractérisé en ce que le moyeu (7) possède des rayons (8) qui sont reliés avec le logement (saillie 18) le maintenant dans l'anneau de retour (11).

3. Moteur électrique selon les revendications 1 ou 2, caractérisé en ce que les rayons (8) du moyeu (7) comme de la roue de ventilateur (14) sont en forme d'ailettes de ventilateur pour obtenir un courant d'air de refroidissement.

4. Moteur électrique selon l'une des revendications précédentes, caractérisé en ce que le moteur électrique avec ses éléments de commande est placé à l'intérieur du boîtier de ventilateur (5) sur la paroi arrière duquel est fixé l'axe central (1).

5. Moteur électrique selon la revendication 4, caractérisé en ce que des composants (20) électroniques de détection de la vitesse de rotation et/ou de la position du rotor sont prévus, lesquels sont en liaison active avec les côtés frontaux des aimants permanents (13) et sont soumis à l'action des champs magnétiques partant de ceux-ci.

6. Moteur électrique selon la revendication 4, caractérisé en ce que sont prévus des composants (20) électroniques de détection de la vitesse de rotation et/ou de la position du rotor, qui agissent dans l'entrefer entre la tête d'enroulement du stator côté B et le rotor permanent (13).

7. Moteur électrique selon les revendications 5 ou 6, caractérisé en ce que les composants (20) électroniques éventuellement aussi d'autres moyens de commutation et de commande, sont placés sur une ou plusieurs plaques de circuits imprimés (19) qui sont prévues côté B entre un composant fixe et le côté frontal du rotor extérieur ou la tête d'enroulement du stator.

8. Moteur électrique selon la revendication 7, caractérisé en ce que les plaques de circuits imprimés (19) sont sollicitées au moins par un courant d'air partiel du courant d'air produit par la roue de ventilateur (14).

9. Moteur électrique selon la revendication 1, caractérisé en ce que la roue de ventilateur (41, 51) est conçue avec des ailettes de ventilateur (40) en une partie, qui sont fixées d'un côté (côté B) sur un anneau de support (48) relié au rotor extérieur (11) et en ce que le boîtier de ventilateur (43) logeant l'axe (1) du moteur, est fermé vers l'extérieur.

10. Moteur électrique selon la revendication 9, caractérisé en ce que la roue de ventilateur (41) relie un anneau de support (48) à peu près tronconique, logé dans sa cavité intérieure, avec le moyeu (7) et l'anneau de retour (11), sur le côté A du moteur électrique et est fixée à cet endroit.

11. Moteur électrique selon la revendication 9, caractérisé en ce que la roue de ventilateur (51) possède d'un côté (côté B) un anneau de maintien (52), pourvu de rayons, sur lequel est prévu à l'extérieur radialement, l'anneau de support (48) avec les ailettes de ventilateur (40) et qui est placé radialement à l'intérieur sur le côté B de l'anneau de retour (11).

12. Moteur électrique selon l'une des revendications précédentes, caractérisé en ce que les composants électroniques de la commande du moteur sont montés sur une plaque de circuits (44) blindée qui est fixée sur le boîtier de ventilateur (43) et qui présente des nervures de refroidissement (45) lesquelles sont balayées par un courant d'air secondaire de la roue de ventilateur (14, 44, 51).

13. Moteur électrique selon l'une des revendications précédentes, caractérisé en ce que l'axe central (1) coopère, en tant que composant à action magnétique, avec le paquet du stator (2).
